(19) 

**Europäisches Patentamt**

**European Patent Office**

**Office européen des brevets**

(11) Veröffentlichungsnummer: **0 016 438**
**B1**

(12) # EUROPÄISCHE PATENTSCHRIFT

(45) Veröffentlichungstag der Patentschrift:
20.06.84

(51) Int. Cl.³: **B 32 B 27/00**, B 44 C 3/08

(21) Anmeldenummer: **80101353.3**

(22) Anmeldetag: **14.03.80**

(54) Verfahren zur Herstellung einer beflockten Bahn.

(30) Priorität: 15.03.79 DE 2910234
24.07.79 DE 2930007

(43) Veröffentlichungstag der Anmeldung:
01.10.80 Patentblatt 80/20

(45) Bekanntmachung des Hinweises auf die Patenterteilung:
20.06.84 Patentblatt 84/25

(84) Benannte Vertragsstaaten:
AT BE CH DE FR GB IT LU NL SE

(56) Entgegenhaltungen:
EP - A - 0 010 246
DE - A - 1 504 799
DE - A - 1 546 576
DE - A - 1 621 940
DE - A - 2 158 322
DE - A - 2 650 628
US - A - 3 354 020
US - A - 4 034 134

Die Akte enthält technische Angaben, die nach dem Eingang der Anmeldung eingereicht wurden und die nicht in dieser Patentschrift enthalten sind.

(73) Patentinhaber: **Alkor GmbH Kunststoffverkauf,
Morgensternstrasse 9 Postfach 71 0109,
D-8000 München 71 (DE)**

(72) Erfinder: **Landler, Josef, Schieszstädtstrasse 84,
D-8190 Wolfratshausen (DE)**
Erfinder: **Mayr, Max, Frank-Caro-Strasse 63,
D-8261 Hart/Alz (DE)**

(74) Vertreter: **Weickmann, Heinrich, Dipl.-Ing. et al,
Patentanwälte Dipl.-Ing. H. Weickmann Dipl.-Phys.Dr. K.
Fincke Dipl.-Ing. F.A. Weickmann Dipl.-Chem. B. Huber
Dr.-Ing. H. Liska Möhlstrasse 22,
D-8000 München 86 (DE)**

ACTORUM AG

## Beschreibung

Die Erfindung betrifft ein Verfahren nach dem Oberbegriff des Anspruchs 1.

In der DE-A 2158322 wird als bekannt vorausgesetzt, velourierte Bahnen in ihrer Oberflächenstruktur dadurch zu variieren, dass nach der Aushärtung der Kleberschicht die Flockschicht einer Prägebehandlung mittels Prägewalzen unterworfen wird, und dass ein zweiter Arbeitsgang für die Erzeugung eines Oberflächenmusters angewandt wird, für den beheizte Prägewalzen eingesetzt werden, um den Flock dauerhaft zu fixieren. Dabei bestehe auch bei Anwendung von grossen Drükken und nahe an der Schmelztemperatur der Fasern liegenden Behandlungstemperaturen die Gefahr, dass die Flockfasern ihr Erinnerungsvermögen beibehalten und in die alte Lage zurückzukehren suchen. In Abweichung zu diesem als bekannt vorausgesetzten Stand der Technik ist nach der DE-A 2158322 ein Verfahren zur Herstellung einer velourierten Materialbahn vorgeschlagen, bei dem die Trägerbahn mit einer Klebstoffschicht versehen wird, hierauf Flockmaterial auf die noch nicht erhärtete Kleberschicht aufgebracht wird und schliesslich die Kleberschicht ausgehärtet wird, wobei der Flock vor der Aushärtung der Kleberschicht der Einwirkung von Gas – insbesondere Luftstrahlen – ausgesetzt wird. Als Trägerbahn wird dabei eine PVC-Bahn vorgesehen. Als Klebstoffschicht ein Lösungsmittelkleber.

Aus der DE-B 1546576 ist es bekannt, eine Beflockung enthaltende Klebstoffschicht nach dem Auftragen von Flockfasern durch Wärmeeinwirkung auszuhärten und anschliessend durch Aufpressen erhitzter Werkzeuge einen Teil der hochstehenden Fasern in den thermoplastischen Kunststoff zu drücken um bestimmte Muster zu erzeugen. Die Strukturierung beruht auf der Prägung in einer erweichten Schicht, nämlich einer thermoplastifizierten Schicht.

Weiter ist es aus der DE-A 2542367 bekannt, ein mit Klebstoff beschichtetes Gewebe zu beflocken und den Flock mittels einer Presswalze in den noch nassen Kleber einzudrücken um anschliessend den Flock beim Trockenvorgang zu fixieren.

Aus einer Veröffentlichung in «Kunststoffe», Band 12, 1952, Heft 10, Seite 356, rechte Spalte ist es bekannt, samtähnliche Oberflächen an Folien und Bahnen von Kunststoffen und Kunststofferzeugnissen aller Art herzustellen, wobei auch geschäumte Erzeugnisse erwähnt werden. Dabei ist auch die Möglichkeit von Prägen und Drucken erwähnt. Aus einer späteren Stelle dieser Arbeit, nämlich Seite 357, linke Spalte ergibt sich, dass Reliefmuster in die noch nicht trockene Beflockung eingeprägt werden sollen.

Aus der US-A 4034134 ist es bekannt, auf einen Filmbildungsträger eine Filmbildungsmasse u.a. auf Acrylbasis ggf. in aufgeschäumtem Zustand aufzutragen, die aufgetragene Schicht sodann zu beflocken und die beflockte Schicht zu härten. Hierauf wird nach Verlassen der Trocknungsstation mittels einer Walze ein Kleber auf die Spitzen des Flocks aufgetragen zwecks anschliessender Befestigung einer Rückseitenbeschichtung (es wird verwiesen auf Spalte 5, Zeilen 17 bis 21, wo ausdrücklich festgestellt wird, dass ein dünner Auftrag von Klebstoff gerade nur auf die Spitzen der Flockfaser aufgetragen wird). Es wird keine Druck- und Wärmebehandlung der beflockten Schaumschicht durchgeführt.

Aus der DE-A 2708842 ist es weiterhin bekannt (siehe Anspruch 2), dass nach dem Trocknen eines beflockten Gegenstandes ein Farbauftrag auf die Flockschicht nach dem Siebdruckverfahren, Rasterdruckverfahren oder Offsetdruckverfahren aufgetragen wird.

Aus der DE-A 1504799 ist es bekannt, auf ein Flächengebilde, beispielsweise ein Gewebe, ein Gewirke oder ein Vlies eine filmbildende Substanz aufzutragen (Seite 3, zweiter Absatz, Zeilen 1 bis 6), wobei die filmbildende Substanz in geschäumtem Zustand angewandt werden kann (Seite 4, zweiter Absatz, Zeilen 1 und 2). Die Beschichtungsmasse kann ein vernetzbares Acrylesterpolymerisat sein (Seite 7, Beispiel 1, Zeile 3). Für den Fall der Vorbildung eines porösen Films, der höchstens teilweise vernetzt war, wird weiter vorgeschlagen, dass dieser mit einer Gewebebahn zusammengeführt wird und zwischen zwei Walzen mit dieser verpresst wird (Seite 7, Beispiel 1, Zeilen 17 bis 20). Eine Beflockung ist bei diesem bekannten Verfahren nicht vorgesehen.

Aus der DE-A 1621940 (vergl. Blatt 4, zweiter Absatz und Blatt 5, erster Absatz) ist ein Verfahren zur Herstellung eines überzogenen Tuches bzw. einer überzogenen Unterlage mit einer daran anhaftenden Schicht eines eingedrückten bzw. gepressten polymeren Schaumes bekannt. Dabei wird eine Emulsion aus einer polymerisierten Latexzusammensetzung geschäumt. Der sich daraus ergebende Schaum wird direkt auf das Tuch bzw. die Unterlage aufgebracht und dort anhaftend teilweise getrocknet. Der getrocknete Schaum wird hierauf eingedrückt bzw. gepresst. Die an dem Tuch bzw. der Unterlage haftende, resultierende, gepresste Schicht aus polymerem Schaum wird hierauf weiter gehärtet und getrocknet, um ein überzogenes Tuch bzw. eine überzogene Unterlage zu liefern, welche weich und geschmeidig ist und eine dauerhafte leichte, gleichmässig durchscheinende Schicht aufweist, wobei ein sehr geringes Eindrücken in die Oberfläche des Tuches bzw. eine sehr geringe anderweitige Beeinflussung des Tuches stattfindet.

Der Erfindung liegt die Aufgabe zugrunde, eine beflockte Bahn als schmiegsames und ggf. luftdurchlässiges Produkt mit weichem Griff zu erhalten, wobei in der Flockschicht bei guter Flockhaftung eine exakt reproduzierbare und beständige Struktur erhalten werden soll.

Zur Lösung dieser Aufgabe werden die Massnahmen nach dem kennzeichnenden Teil des Anspruchs 1 vorgeschlagen.

Bei dem erfindungsgemässen Verfahren wird eine exakt reproduzierbare Struktur erhalten, obwohl die Behandlung mittels beheizter Presswalzen oder Pressplatten nach dem Durchgang durch den Heizkanal erfolgt. Es hat sich weiter gezeigt, dass ein in hohem Masse griffreundliches, weiches, schmiegsames und auch an komplizierte Flächen anpassungsfähiges Produkt erhalten wird.

Wenn hier davon gesprochen wird, dass die Verbindungsschicht den Heizkanal durchläuft, bevor die Bahn mittels der beheizten Presswalzen oder Pressplatten nachbehandelt wird, so ist dabei insbesondere eine so weitgehende Aushärtung vorgesehen, dass die Scheuerfestigkeit der Flockschicht nach dem Durchgang durch den Heizkanal und vor der Nachbehandlung bereits vergleichbar gut ist wie die Scheuerfestigkeit von textilhergestellten Stoffen ähnlicher Oberflächenbeschaffenheit.

Dadurch, dass die Behandlung mittels Presswalzen oder Pressplatten nach der erfolgten Aushärtung im Heizkanal stattfindet, wird auch vermieden, dass die Verbindungsschicht tiefer als für eine ausreichende Haftung notwendig und als für eine Erhaltung eines griffreundlichen, weichen Produkts erwünscht in die Trägerbahn hineingedrückt wird. Auch wird vermieden, dass die Verbindungsschicht beim Pressen durch die Flockschicht hindurch an die Oberfläche tritt.

Bei der Nachbehandlung unter Wärme und Druck kann eine ergänzende Härtung der Verbindungsschicht stattfinden.

Dafür, dass trotzdem eine exakt reproduzierbare und beständige Flockstruktur erhalten wird, obwohl die Nachbehandlung nach dem Durchgang durch den Heizkanal erfolgt und obwohl die Verbindungsschicht als Schaumschicht keine auch nur annähernd starre Unterlage für die Einwirkung der Nachbehandlung auf die Flockschicht darstellt, könnte verantwortlich sein, dass die Verbindungsschicht nach dem Durchgang durch den Heizkanal noch nicht vollständig ausgehärtet ist.

Die Presswalzen oder Pressplatten können glatt sein, wobei sich wildlederartig verfilzte Oberflächen mit teilweise umgelegten Fasern ergeben können. Nach einer bevorzugten Ausführungsform wird die beflockte Seite der Bahn bei der Behandlung mittels der beheizten Presswalzen oder Pressplatten geprägt. Durch die Prägung der Flockschicht kann deren velourähnlicher Charakter modifiziert werden, etwa dahingehend, dass der optische und griffmässige Eindruck einer gewebten oder gewirkten Textilbahn oder einer lederähnlichen Oberfläche erzeugt wird (Anspruch 2).

Die erfindungsgemäss zur Anwendung kommenden porösen Bahnen, insbesondere Faservliesbahnen, Gewirkebahnen oder Gewebebahnen lassen sich ohne wesentliche Faltenbildung zu Flächen höherer Ordnung deformieren. Unter Flächen höherer Ordnung werden insbesondere räumliche Flächen verstanden, welche weder zylindrisch noch prismatisch sind, beispielsweise schalen- oder napfförmige Flächen.

Die Massnahme des Anspruchs 4 sorgt dafür, dass die Bindung der porösen Bahn an die Verbindungsschicht und ggf. an die Unterlage durch mechanische Verankerung begünstigt wird.

Der stoffliche Aufbau der Verbindungsschicht gemäss Anspruch 5 erweist sich als besonders vorteilhaft, wenn ein amoniakalischs Vernetzungsmittel vorgesehen wird und wenn die wässrige Dispersion Verdicker und/oder Farbpigmente und/oder Füller wie z.B. Kaolin, Talcum oder Calciumcarbonat und/oder Thixotropiemittel und/oder Äthylenharnstoff und/oder Triazinharz enthält.

Die Massnahme des Anspruchs 8 hat sich insbesondere in Verbindung mit der stofflichen Zusammensetzung der Verbindungsschicht gemäss Anspruch 5 als besonders vorteilhaft erwiesen und eine rasierschaumartige Schaummasse zu erhalten, die in gewünschtem Masse in die poröse Bahn eindringt.

Von besonderem Interesse ist die Massnahme nach dem Anspruch 9, wobei die gleichzeitige Verformung und Prägung den Vorteil einer exakten Abstimmung des Prägemusters auf die zu erzeugende Raumform zulässt, beispielsweise so, dass Nähte oder Kanten an der richtigen Stelle liegen. Es ist aber auch denkbar, die Prägung vor der Massnahme des Anspruchs 9 anzubringen.

Bei der Vereinigung und gleichzeitigen Verpressung der Bahn mit einer Unterlage tritt das Problem der Bildung von Lufteinschlüssen und der Bildung von Blasen auf. Die Verwendung der porösen Bahn gemäss Anspruch 1 erleichtert die Bescherrschung dieses Problems, weil die poröse Bahn die Verteilung und/oder den Abzug von Lufteinschlüssen erleichtern kann. Auch der Aufbau der Verbindungsschicht als Schaummasse erleichtert die Verteilung und/oder den Abzug von Lufteinschlüssen insbesondere dann, wenn es sich um einen offenzelligen Schaum handelt. Gute Ergebnisse im Sinne der Vermeidung von Lufteinschlüssen und Blasen werden erreicht, wenn das Flächengewicht eines Nadelvlieses mindestens 50 g/qm, vorzugsweise mindestens 70 g/qm beträgt und die Faserlänge mindestens 40 bis 60 mm. Ein solches Faservlies ist auch im Hinblick auf die Hafteigenschaften und die Verformungseigenschaften günstig.

Als Unterlage kommen gemäss den Ansprüchen 10 und 11 insbesondere Platten in Frage, welche unter Verwendung eines thermoplastischen Kunststoffs als Bindemittel und eines Füllers hergestellt worden sind, beispielsweise sogenannte Polyolefin-Holzmehl-Platten (POHM-Platten), welche vorzugsweise einen Gehalt von 50 Gew.-% Holzmehl enthalten. Diese Platten lassen sich wegen ihres Gehaltes an thermoplastischem Bindemittel besonders leicht mit der flächigen Trägerbahn vereinigen, insbesondere wenn die Trägerbahn aufgrund ihrer Faserstruktur zu einer mechanischen Verankerung in dem thermoplastischen Bindemittel neigt. Dies gilt besonders für Trägerbahnen, welche von Vliesen, z.B. Nadelvliesen, gebildet sind. Wenn der zwischen den Füllerteilchen als Bindemittel enthaltene thermoplastische Kunststoff nicht ausreicht, um eine gute belastungsfähige Bindung zwischen der Unterlage und der Trägerbahn herzustellen, so ist es auch denkbar, die Unterlage auf ihrer der Trägerbahn zugekehrten Seite mit einer zusätzlichen thermoplastischen Schicht zu versehen, insbesondere mit einer thermoplastischen Schicht aus dem gleichen thermoplastischen Material, welches auch als Bindemittel innerhalb der Unterlage vorliegt und sich deshalb leicht mit dem Bindemittel der Unterlage verbindet. Eine bevorzugte Art, um die Verbindung zwischen solchen Unterlagen und der Trägerbahn herzustellen, besteht darin, dass man entsprechend Anspruch 9 die ein thermoplastisches Bindemittel enthaltende Unterlage im heissen Zustand zusammen mit der Trägerbahn verpresst, wobei durch das thermoplastifizierte Bindemittel der Unterlage oder eine thermoplastifizierte Überzugsschicht der Unterlage die Verbindung mit der Trägerbahn hergestellt wird.

Bei der Verfahrensweise nach den Ansprüchen 1, 9, 10 und 11 ist insbesondere vorteilhaft, dass der Endverarbeiter, der die schaumbeschichtete und beflockte Trägerbahn mit der Unterlage vereinigt, nur noch die Erhitzung der Unterlage und die Verpressung vornehmen muss und nicht mit dem Auftragen, Trocknen und Härten von Kunststoff und Haftvermittler befasst ist. Dies ist besonders deshalb wichtig, weil diese Endverarbeitung häufig in Verarbeitungsbetrieben z.B. in Autofabriken zwecks Herstellung von Innenverkleidungsteilen durchgeführt wird, also in Betriebsstätten, die nicht auf die Verarbeitung von schaumförmigen Kunststoffen und von Klebern eingerichtet sind.

Eine Unterlage kann auf die Trägerbahn auch nach anderen Methoden aufgebracht werden. Beispielsweise kann die Trägerbahn gemäss Anspruch 12 mit Kunststoff hinterspritzt oder hinterschäumt werden. Auch ist es denkbar, dass man auf die Trägerbahn auf ihrer von dem beflockten Schaumauftrag abgelegenen Seite gemäss Anspruch 14 eine lagerstabile Haftvermittlerschicht aufbringt, um so die Trägerbahn zu einem beliebigen späteren Zeitpunkt auf einen zu überziehenden Körper aufziehen und befestigen zu können. Die lagerstabile Haftvermittlerschicht kann dabei in Form einer Folie oder in Form eines Aufstrichs aufgetragen werden. Handelt es sich um eine Haftvermittlerschicht, die lediglich durch Druck an einem zu überziehenden Körper befestigt werden soll und die deshalb auch bei unbeabsichtigtem Berühren klebrig ist, so kann diese Haftvermittlerschicht bis zum Gebrauch mit einer Abdeckfolie oder einem Abdeckpapier bedeckt werden. Als Unterlage für die Trägerbahn kommt schliesslich auch eine Weichschaumstoffunterlage in Frage.

Die Trägerbahn neigt nicht zur Ablösung von damit verbundenen Unterlagen. Eine solche Ablösungsgefahr tritt nicht einmal dann ein, wenn bei der Vereinigung mit der Unterlage eine Verformung, insbesondere dreidimensionale Verformung der Trägerbahn gemäss Anspruch 9 stattfindet. Aus diesem Grunde ist das erfindungsgemäss hergestellte Material besonders geeignet zur Herstellung von Automobilverkleidungsteilen, welche wegen der im Gebrauch zu erwartenden hohen Temperaturen bei Sonneneinstrahlung besonders zur Ablösung neigen, und hier wieder insbesondere an konkaven Flächen. Auch die hohe Dimensionsstabilität des erfindungsgemäss hergestellten Materials ist sowohl für die Erhaltung einer gewünschten Form als auch für die Erhaltung einer gewünschten Oberflächenstruktur von grosser Bedeutung.

Im Hinblick auf eine gute Flockhaftung ist es natürlich wesentlich, dass der Flock auf den noch möglichst weichen Schaum aufgetragen wird, bevor der Zulauf durch den Heizkanal erfolgt. Auf diese Weise lässt sich eine hohe Scheuerfestigkeit des Flocks erzielen.

Nach dem erfindungsgemässen Verfahren erhält man eine ausgezeichnete Thermofixierung. Thermofixierung bedeutet, dass die Bahn unter hoher Temperatur weiter verarbeitet werden kann. Dabei ist insbesondere an ein Bedrucken im Transferverfahren gedacht, bei welchem Druckfarbe auf einen Zwischenträger aufgetragen wird und dieser Zwischenträger sodann mit der Farbseite zur Flockschicht liegend gemeinsam mit der Trägerbahn zwischen Druckwalzen bei hoher Temperatur hindurchläuft, wobei eine Migration der Druckfarben von dem Zwischenträger zur Flockschicht stattfinden kann.

Die beiliegenden Figuren erläutern die Erfindung anhand eines Ausführungsbeispiels; es stellen dar:

Fig. 1 eine Anlage zur Durchführung des erfindungsgemässen Verfahrens;

Fig. 2 einen Schnitt durch eine nach dem erfindungsgemässen Verfahren hergestellte beflockte Bahn;

Fig. 3 ein in der Anlage gemäss Fig. 1 gewonnenes Material nach Vereinigung mit einer Unterlage;

Fig. 4 und 5 verschiedene andere Unterlagen zur Vereinigung mit dem gemäss Fig. 1 hergestellten Material;

Fig. 6 eine Anlage zur Hinterspritzung eines gemäss Fig. 1 hergestellten Materials;

Fig. 7 ein gemäss Fig. 1 hergestelltes Material mit einer Haftvermittlerschicht.

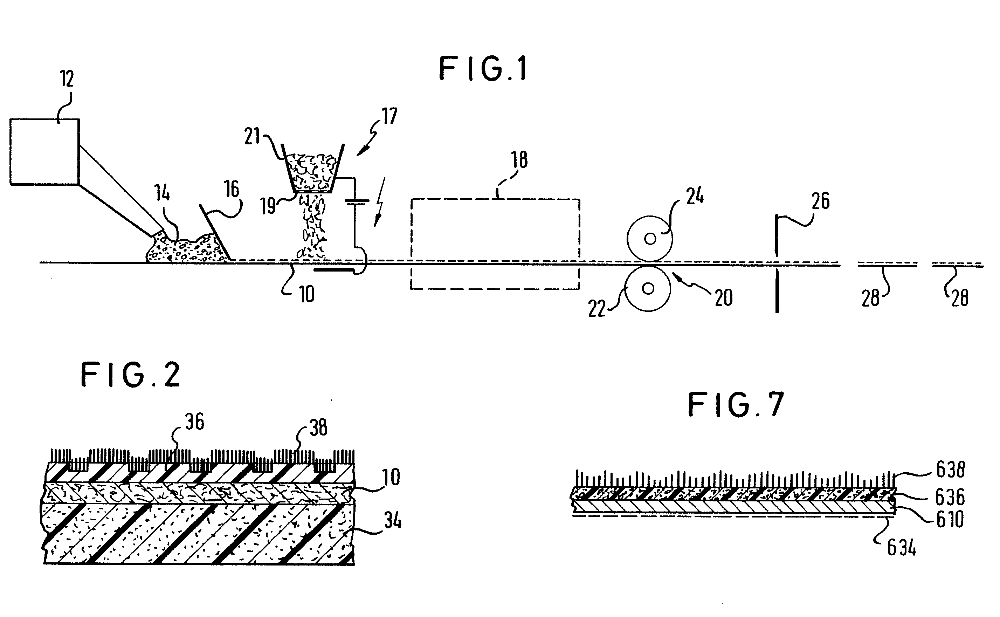

In Fig. 1 ist mit 10 eine Trägerbahn bezeichnet. Über dieser Trägerbahn ist eine Aufschäumvorrichtung 12 angeordnet, aus welcher der Schaum 14 auf die Trägerbahn 10 gelangt. Eine Rakelvorrichtung 16 breitet den Schaum auf der Trägerbahn 10 zu einer Schicht von gleichmässiger Dicke aus. Eine elektrostatische Beflockungseinrichtung 17 umfasst einen Rüttelbehälter 21 mit einem Siebboden 19, durch welchen Flockfaser auf den Schaum aufgerüttelt wird. Zur Beschleunigung und Ausrichtung der Flockfasern ist eine Hochspannung in bekannter Weise angelegt. In einem Heiztunnel 18 wird der beflockte Schaum einer ersten Wärmebehandlung unterworfen, wobei er getrocknet und teilweise vernetzt wird. In einer Walzstation 20 mit einer Unterwalze 22 und einer Prägewalze 24 wird in die Oberseite des beflockten und getrockneten und teilweise vernetzten Schaums ein feinstrukturiertes Prägemuster eingeprägt. In einer Schneidestation 26 wird die Dekorschicht zu einzelnen Zuschnitten 28 zerschnitten.

Beispiele für die stoffliche Zusammensetzung des aufgeschäumten Kunststoffmaterials:

Beispiel 1

100 Gew.-Teile einer 45%-igen wässrigen Dispersion eines thermisch vernetzbaren Polyacrylsäureesters mit der Bezeichnung «Dicrylan AM» gemäss Pfersee Rezeptdienst A 423/3-76/62-167 Seiten 1–10 der Firma Chemische Fabrik Pfersee GmbH, Augsburg wurden in ein Mischgefäss mit Rührwerk gegeben.

In dieses Gefäss wurde sodann nacheinander in der Reihenfolge der Aufzählung eingerührt:

1,2 Gew.-Teile Laurylsulfat mit der Bezeichnung Dicrylan-Verschäumer 7028 gemäss Pfersee-Information ID 707a/6-78/62 Seiten 1–12 der Chemischen Fabrik Pfersse GmbH Augsburg,

2 Gew.-Teile Ammoniak, wobei die Gesamtlösung auf einen pH-Wert von 8 eingestellt wurde;

6 Gew.-Teile eines als Schaumstabilisator wirksamen Stearats mit der Bezeichnung Dicrylan-Stabilisator F gemäss Pfersee-Information ID 707a/6-78/62 der Chemischen Fabrik Pfersee GmbH, Augsburg, Seiten 1–12,

2 Gew.-Teile einer 30%-igen wässrigen Polymethacrylsäure-Dispersion mit der Bezeichnung Dicrylan-Verdicker R gemäss Pfersee Rezeptdienst «Dicrylan Verdicker R» der Chemischen Fabrik Pfersee GmbH, Augsburg,

3 Gew.-Teile eines Äthylenharnstoff/Triazin-Harzes mit der Bezeichnung Knitex CR gemäss Pfersee Rezeptdienst K 232a/3-74/82 der Chemischen Fabrik Pfersee GmbH, Augsburg.

Dieses Gemisch wurde ohne Aufschäumung gerührt, bis eine homogene Dispersion erhalten wurde.

Beispiel 2

Um ein schwarzes Produkt zu erhalten, wurden in die gemäss Beispiel 1 erhaltene Dispersion 7 Gew.-Teile eines schwarzen Farbpigments der Bezeichnung Unisperse-Black gemäss Prospekt Unisperse E p74/4 der Fa. Ciba Geigy (U.K.) Limited eingerührt.

Beispiel 3

Um ein beiges Produkt zu erhalten, wurde ein Pigmentansatz zubereitet, welcher enthielt:
5 Gew.-Teile Titandioxid
4 Gew.-Teile Wasser
0,4 Gew.-Teile Irgasol DAM (Dispergator für Titandioxid und andere Pigmente zur Dispergierung in Wasser)
4 Gew.-Teile Unisperse-Yellow-Oxide M–E[+]
0,08 Gew.-Teile Unisperse-Black C–E[+]
0,08 Gew.-Teile Unisperse-Red RN–E[+] (Toluidin)
 * gemäss Prospekt Unisperse E p74/4 der Fa. Ciba Geigy (U.K.) Limited.

Dieser Pigmentansatz wurde der Mischung gemäss Beispiel 1 zugemischt.

Beispiel 4

Einer Dispersion gemäss Beispiel 1 wurden 5 Gew.-Teile Antimontrioxid und 5 Gew-Teile Bromspender zur Schwerentflammbarmachung zugesetzt.

Beispiel 5

Einer Dispersion gemäss Beispiel 1 wurden 100 Gew.-Teile Titandioxid als Füllstoff zugerührt, die vor ihrer Zugabe auf einem Walzenstuhl abgerieben und in Wasser angeteigt wurden.

Beispiele für die weitere Verarbeitung:

Beispiel 6

Die Dispersionen gemäss den Beispielen 1 bis 5 wurden in einem Schäumgerät unter Luftzufuhr schaumig geschlagen. Der Schaum weist dabei etwa eine «Rasierschaum»-ähnliche Konsistenz auf. Das spezifische Gewicht beträgt ca. 200 g/l.

Die so gewonnenen Schäume wurden aus dem Schäumgerät kommend unmittelbar der Aufrakelvorrichtung zugeführt, in welcher sie auf ein Polyesterspinnvlies (60 g/m²) aufgerakelt wurden, und zwar in einer Menge von ca. 250 g Schaum pro m² Vlies. Beim Aufrakeln drang der Schaum nur in die oberen Schichten des Vlieses ein.

Der noch nasse Schaum wurde hierauf elektrostatisch mit einem Polyamidschnittflock in der Flockauftragvorrichtung beflockt. Die Flocklänge betrug 0,75 mm. Der Fadentiter betrug 1,7 dtex. Das Auftragsgewicht pro m² war ca. 80 g. Der beflockte flächige Träger 10 wurde dann im Heizkanal 18 während einer Verweilzeit von ca. 7 Minuten bei Temperaturen von 140 bis 170°C steigend ausgehärtet. Die Flockhaftung nach dem Ausheizen war ausgezeichnet, insbesondere ergab sich eine Scheuerfestigkeit, die mit der Scheuerfestigkeit von textil hergestellten Stoffen ähnlicher Oberflächenbeschaffenheit vergleichbar war.

Die so gewonnene Bahn wurde sodann in einem Kalander 20 einer Druckbehandlung bei einem Liniendruck von ca. 600 bis 1500 N/cm und einer Walzentemperatur von 200°C unterworfen.

In einem ersten Fall waren die Kalanderwalzen beide glatt. Dabei ergab sich eine wildlederartige verfilzte Oberfläche mit teilweise umgelegten Fasern.

In einem zweiten Fall wurde auf der Flockseite eine Prägewalze 24 mit Textilcharakter verwendet. Dabei ergab sich eine textilähnliche Oberfläche der Flockschicht, wie in Fig. 2 dargestellt. Je nach Art der Walze konnten die verschiedensten Textilarten imitiert werden.

In Fig. 2 ist die Schaumstoffschicht mit 36 und die Flockschicht mit 38 bezeichnet. Mit 34 ist eine Unterlage bezeichnet, auf die noch einzugehen sein wird.

In einem dritten Fall wurde auf der Flockseite eine Prägewalze mit lederartiger Oberfläche verwendet. Je nach Art der Walze konnten verschiedene Lederarten, vom genarbten Leder bis zum Wildleder, imitiert werden.

Es zeigte sich in allen Fällen der Druck- und Temperaturnachbehandlung, dass die Flockhaftung und insbesondere die Scheuerfestigkeit noch verbessert wurden, was unter anderem darauf zurückzuführen sein dürfte, dass durch diese Nachbehandlung noch eine zusätzliche Aushärtung und Verdichtung des Schaums erzielt wurde.

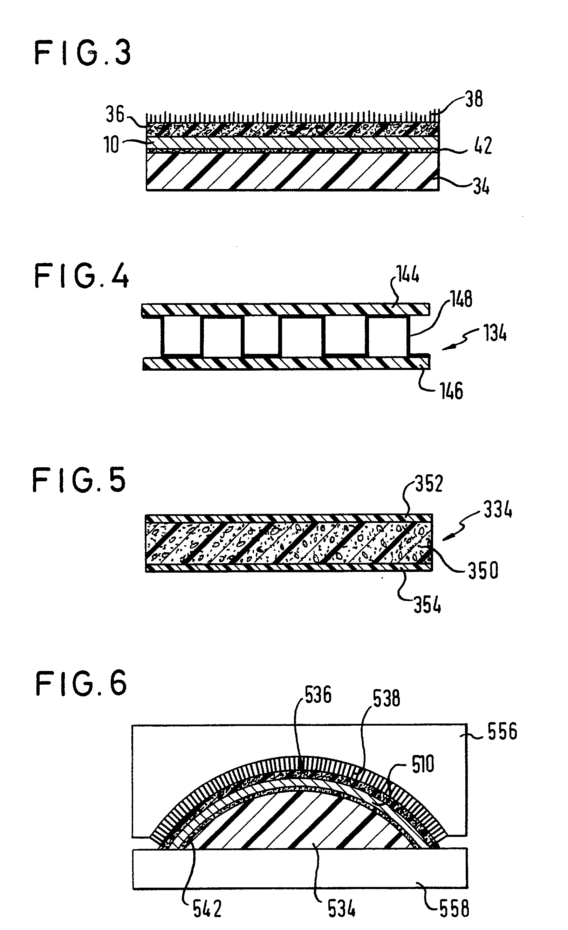

In Fig. 3 ist mit 10 die Trägerbahn bezeichnet, mit 36 die vernetzte Kunststoffschaumschicht und mit 38 der elektrostatisch aufgebrachte Flock. Man erkennt ferner eine Unterlage 34. Diese Unterlage 34 kann eine massive Kunststoffplatte, beispielsweise aus ABS-Kunststoff (Acrylnitril-Butadien-Styrol) oder Polypropylen sein. Die Wandstärke dieser massiven Kunststoffschicht kann 0,5 bis 5 mm betragen. Diese Unterlage kann plan bleiben; sie kann aber auch durch Pressen oder Tiefziehen zu dreidimensionalen, z.B. schalenförmigen Formteilen verformt werden. Die Vereinigung des flächigen Trägers 10 mit der Unterlage 34 kann unter Vermittlung eines Haftvermittlers 42 hergestellt werden. Dieser Haftvermittler kann auf dem flächigen Träger 10 und/oder auf der Unterlage 34 aufgetragen werden. Man kann unter Umständen aber auch ohne Haftvermittler auskommen, beispielsweise, wenn der flächige Träger 10 aus einem Kunststoffaservlies besteht, welches sich unter Wärme und Druck mit der Unterlage 34 gut haltend verbinden lässt. Dies gilt beispielsweise, wenn der flächige Träger 10 ein Polypropylen-Faservlies ist und die Unterlage 34 eine Polypropylen-Platte. Die Verbindung zwischen dem flächigen Träger 10 und der Unterlage 34 kann insbesondere dadurch hergestellt werden, dass man eine massive Kunststoffschicht 34 extrudiert und dem noch thermoplastischen Extrudat den bereits mit den Schichten 36 und 38 vereinigten flächigen Träger 10 zulaufen lässt, wobei es denkbar ist, eine gegebenenfalls zur Anwendung kommende Haftvermittlerschicht 40 mit der Kunststoffschicht 34 zu koextrudieren.

Die dreidimensionale Verformung kann gleichzeitig mit der Vereinigung des flächigen Trägers 10 und der Unterlage 34, z.B. in einer Presse, erfolgen.

Die Unterlage 34 kann auch ersetzt sein durch eine Verbundplatte 134, wie sie in Fig. 4 dargestellt ist. Diese Verbundplatte 134 besteht aus Deckschichten 144 und 146, zwischen denen ein wellenförmiges, beispielsweise rechteckwellenförmiges Material 148 eingeschlossen ist. Das wellenförmige Material kann ebenso wie die Deckschichten 144, 146 aus Kunststoff bestehen, beispielsweise Polycarbonat, wobei die Schichten 144, 146, 148 durch Koextrusion in Richtung senkrecht zur Zeichenebene der Fig. 6 hergestellt sein können.

Die Unterlage 34 kann insbesondere auch eine mit Füllmaterial versetzte Kunststoffschicht sein und kann beispielsweise eine sogenannte POHM-Platte sein, welche aus Polyolefin und Holzmehl besteht, etwa aus 50% Polyolefin und 50% Holzmehl. In diesem Fall kann die Vereinigung der Platte 34 mit dem flächigen Träger 10 dadurch erfolgen, dass die bereits mit den Schichten 36 und 38 versehene Trägerbahn 10 auf die vorher erhitzte Platte 34 aufgelegt und mit dieser gegebenenfalls unter dreidimensionaler Verformung verpresst wird, wobei im Falle ausreichender Affinität zwischen der Trägerbahn 10 und der Platte 34 auf den Haftvermittler 42 verzichtet werden kann. Es kann aber auch ein Haftvermittler 42 in Form einer thermoplastischen Schicht vorliegen, welche auf der Oberfläche der Platte 34 aufgetragen ist und aus dem gleichen Kunststoffmaterial bestehen kann, welches in der Platte 34 enthalten ist.

Die Unterlage kann auch aus einer Hartschaumstoffschicht gebildet sein, welche unter Vermittlung des Haftvermittlers mit dem flächigen Träger vereinigt wird. Beispielsweise kommt als Hartschaumstoffschicht eine Polyurethan-Schaumstoffschicht in Frage.

Weiter kann die Unterlage, wie in Fig. 5 dargestellt, eine Sandwichplatte 334 sein, bestehend aus einer Mittelschicht 350 von Hartkunststoffschaum, beispielsweise aus Polyurethanschaum, und Aussenschichten 352, 354, welche aus Massivkunststoff, z.B. ABS, aus Aluminiumfolien, aus Gewebebahnen, aus Papierbahnen oder Vliesbahnen bestehen können. Auch hier wird die eine der Aussenschichten 352, 354 gegebenenfalls unter Verwendung des Haftvermittlers mit dem flächigen Träger verbunden, der bereits vorher mit den Schichten 36 und 38 versehen worden ist.

Eine weitere Möglichkeit für die Unterlage besteht darin, diese aus einem Faserhaufwerk mit eingelagertem Bindemittel, z.B. Phenolharz herzustellen. Das ursprünglich voluminösere Faserhaufwerk wird dabei unter Temperatur und Druck in Plattengestalt gebracht, wobei das Phenolharz ausgehärtet wird. Die Trägerbahn kann an der so gewonnenen Platte unter Vermittlung eines Klebers befestigt werden. Es ist jedoch auch denkbar, die Vereinigung im Zuge der Verpressung des Haufwerks vorzunehmen und dazu sich entweder einer zusätzlichen, an der Trägerbahn aufgetragenen Kleberschicht zu bedienen oder sich auf die Klebewirkung des in dem Haufwerk eingelagerten Kunstharzes zu verlassen. Das Haufwerk kann insbesondere ein Baumwollfaser-Haufwerk sein.

Der Körper in Fig. 3 kann als Unterlage auch eine Blechplatte umfassen, beispielsweise ein Karosserie- oder Verkleidungsblech, welches durch die den Flock 38 tragende Trägerbahn 10 veredelt werden soll. Auch bei der Vereinigung mit einem Blech kann ein Haftvermittler 42 verwendet werden, welcher auf das Blech und/oder die ihm zugekehrte Seite der Trägerbahn 10 vorher aufgetragen werden kann.

Fig. 6 zeigt eine weitere Möglichkeit zur Verbindung der bereits mit der Kunststoffschaumschicht 536 und dem Flock 538 versehenen Trägerbahn 510 mit einer Unterlage 534.

Analoge Teile sind mit gleichen Bezugszeichen versehen wie in Fig. 3, jeweils vermehrt um die Zahl 500. In eine zweiteilige Form, bestehend aus der Oberformhälfte 556 und der Unterformhälfte 558 ist ein Zuschnitt der bereits mit der Schaumstoffschicht 536 und dem Flock 538 versehenen Trägerbahn eingelegt, wobei die Flockseite 538 an der konkaven Innenfläche der Oberformhälfte 556 gegebenenfalls nach vorheriger Vorverformung anliegt. Die Trägerbahn 510 ist mit einem Kunststoffkörper 534 hinterspritzt. Der Kunststoffkörper 534 kann auch ein Schaumkunststoffkörper sein. Zur Verbindung des Kunststoffkörpers 534 mit der Trägerbahn 510 kann vorher auf diesen ein Haftvermittler 542 aufgetragen worden sein.

Fig. 7 zeigt eine Ausführungsform, bei der als Unterlage eine lagerstabile Haftvermittlerschicht 634 aufgetragen ist. Diese Haftvermittlerschicht 634 kann in Form eines Aufstrichs oder in Form einer Folie aufgetragen sein, in jedem Fall ist nach dem Auftrag die Konsistenz der Haftvermittlerschicht 634 eine solche, dass der in Fig. 7 dargestellte Schichtaufbau lager- und transportfähig ist, um unter Vermittlung der Haftvermittlerschicht 634 später auf eine weitere Unterlage aufkaschiert werden zu können, wobei zum Zwecke der Kaschierung die Haftvermittlerschicht 634 beispielsweise durch Wärme reaktiviert werden kann. Es ist aber auch denkbar, dass die Haftvermittlerschicht 634 eine Haftkleberschicht ist, die eine Haftung allein bei Druckeinwirkung eingeht. In diesem letzteren Fall kann die Haftvermittlerschicht 634 mit einer Dehäsivfolie oder Trennfolie oder einem Dehäsivpapier abgedeckt worden sein, das vor der Verarbeitung abgezogen wird.

Schliesslich kommt als Unterlage auch eine Weichschaumstoffschicht in Frage, welche mit der Trägerbahn wiederum unter Vermittlung eines Haftvermittlers oder aber nach dem üblichen Verfahren der Flammkaschierung vereinigt werden kann, wobei bei der Flammkaschierung die zur Vereinigung bestimmte Seite der Weichschaumstoffschicht durch eine sie bestreichende Flamme erweicht und damit klebrig gemacht wird.

Eine ausreichende Haftung kann gemäss Fig. 3 z.B dann erzielt werden, wenn der Kunststoffschaum 36 in die Trägerbahn 10 bis zu einer Tiefe von 5 bis 30%, vorzugsweise 10 bis 20% der Dicke der Trägerbahn eindringt.

**Patentansprüche**

1. Verfahren zur Herstellung einer beflockten Bahn, insbesondere zur Beschichtung von Unterlagen, bei denen man auf eine Trägerbahn eine wärmeaushärtbare Verbindungsschicht aufträgt, die noch nicht ausgehärtete Verbindungsschicht beflockt und die Flockschicht anschliessend zur Erzielung einer Struktur mittels beheizter Presswalzen oder Pressplatten nachbehandelt, dadurch gekennzeichnet, dass man als Trägerbahn eine poröse Bahn, insbesondere eine Faservliesbahn, eine Gewirkebahn oder eine Gewebebahn verwendet und für die Verbindungsschicht eine vorgeschäumte, wärmehärtbare Schaummasse verwendet, wobei die Schaumfestigkeit derart auf die Porosität der Trägerbahn eingestellt wird, dass die Schaummasse vor der Aushärtung in einem Heizkanal zwar oberflächlich in die Trägerbahn eindringt, diese aber nicht vollständig durchdringt und dass die Nachbehandlung im Anschluss an den Durchgang durch den Heizkanal erfolgt.

2. Verfahren nach Anspruch 1, dadurch gekennzeichnet, dass die Nachbehandlung in einer Prägung besteht, insbesondere zur Erzeugung einer Oberflächenstruktur nach Art einer gewebten oder gewirkten Textilbahn oder einer lederähnlichen Oberfläche.

3. Verfahren nach Anspruch 1 oder 2, dadurch gekennzeichnet, dass man ein Polyesterspinnvlies oder Polypropylenfaservlies als Trägerbahn verwendet.

4. Verfahren nach einen der Ansprüche 1 bis 3, dadurch gekennzeichnet, dass man eine Faservliesbahn verwendet, in welcher mindestens ein Teil der Fasern sich senkrecht zur Bahnebene erstreckt, insbesondere eine Nadelvliesbahn.

5. Verfahren nach einem der Ansprüche 1 bis 4, dadurch gekennzeichnet, dass man einen Schaum auf der Basis einer wässrigen Kunststoffdispersion verwendet, insbesondere einen Schaum auf der Basis einer wässrigen Dispersion eines thermisch vernetzbaren Polyacrylsäureesters.

6. Verfahren nach einem der Ansprüche 1 bis 4, dadurch gekennzeichnet, dass man einen Schaum auf der Basis eines lösungsmittelhaltigen Kunststoffs aufträgt.

7. Verfahren nach einem der Ansprüche 1 bis 4, dadurch gekennzeichnet, dass man einen Schaum auf der Basis einer flüssigen Mischung von miteinander reagierenden Komponenten aufträgt.

8. Verfahren nach einem der Ansprüche 1 bis 7, dadurch gekennzeichnet, dass ein Schaum aufgetragen wird, welcher durch mechanische Behandlung aufgeschäumt worden ist.

9. Verfahren nach einem der Ansprüche 1 bis 8, dadurch gekennzeichnet, dass die Verbindung der beflockten Bahn mit der Unterlage unter gleichzeitiger dreidimensionaler Verformung zwischen den hin- und hergehenden Ober- und Unterwerkzeugen einer Presse hergestellt wird, ggf. unter gleichzeitiger Prägung der beflockten Schaumschicht.

10. Verfahren nach einem der Ansprüche 1 bis 9, dadurch gekennzeichnet, dass man als Unterlage eine Platte verwendet, welche unter Verwendung eines thermoplastischen Kunststoffs als Bindemittel und eines Füllers hergestellt worden ist.

11. Verfahren nach Anspruch 10, dadurch gekennzeichnet, dass als Bindemittel ein Polyolefins und als Füller Cellulosematerial verwendet wird, insbesondere in Form von Polypropylen-Holzmehl, mit einem Gehalt von ca. 50 Gew.-% Polypropylen und ca. 50 Gew.-% Holzmehl.

12. Verfahren nach einem der Ansprüche 10 und 11, dadurch gekennzeichnet, dass man die das thermoplastische Bindemittel enthaltende Unterlageplatte im heissen Zustand zusammen mit der beflockten Bahn in eine Presse einbringt und gemeinsam verpresst.

13. Verfahren nach Anspruch 1, dadurch gekennzeichnet, dass man zur Bildung der Unterlage die beflockte Bahn mit Kunststoff hinterspritzt oder hinterschäumt.

14. Verfahren nach einem der Ansprüche 1 bis 11, dadurch gekennzeichnet, dass man die beflockte Bahn mit einer lagerstabilen Haftvermittlerschicht versieht, insbesondere in Form einer Folie.

15. Verfahren nach einem der Ansprüche 1 bis 8, dadurch gekennzeichnet, dass die Unterlage aus Weichschaumstoff besteht.

## Revendications

1. Procédé de fabrication d'une bande floquée, en particulier pour recouvrir d'une couche des bases, selon lequel on applique une couche de liaison thermodurcissable sur une bande support, on floque la couche de liaison non encore durcie et on retraite ensuite la couche floquée pour obtenir une texture au moyen de rouleaux compresseurs ou de plateaux de serrage chauffés, caractérisé en ce qu'on utilise, en tant que bande support, une bande poreuse, en particulier une bande de feutre de fibres, une bande de tissu à mailles ou une bande de tissu et on utilise, pour la couche de liaison, une masse de mousse thermodurcissable ayant préalablement moussé, la rigidité de la mousse étant réglée sur la porosité de la bande support de sorte que la masse de mousse, avant le durcissement dans un carneau de chauffage, pénêtre certes en surface dans la bande support mais n'imprègne pas celle-ci complètement et que le traitement subséquent ait lieu à la suite du passage à travers le carneau de chauffage.

2. Procédé selon la revendication 1, caractérisé en ce que le traitement subséquent consiste en un gaufrage, en particulier pour produire une texture de surface à la manière d'une bande de textile tissée ou tricotée ou d'une surface analogue à du cuir.

3. Procédé selon la revendication 1 ou 2, caractérisé en ce qu'on utilise comme bande support un feutre de fils en polyester ou un feutre de fibres en polypropylène.

4. Procédé selon l'une des revendications 1 à 3, caractérisé en ce qu'on utilise une bande de feutre de fibres dans laquelle au moins une partie des fibres s'étendent perpendiculairement ou plan de la bande, en particulier une bande de feutre aiguilleté.

5. Procédé selon l'une des revendications 1 à 4, caractérisé en ce qu'on utilise une mousse à base d'une dispersion aqueuse de matière synthétique, en particulier une mousse à base d'une dispersion aqueuse d'un ester d'acide polyacrylique réticulable thermiquement.

6. Procédé selon l'une des revendications 1 à 4, caractérisé en ce qu'on applique une mousse à base d'une matière synthétique renfermant un solvant.

7. Procédé selon l'une des revendications 1 à 4, caractérisé en ce qu'on applique une mousse à base d'un mélange liquide de composants réagissant entre eux.

8. Procédé selon l'une des revendications 1 à 7, caractérisé en ce qu'on applique une mousse que l'on a fait mousser par traitement mécanique.

9. Procédé selon l'une des revendications 1 à 8, caractérisé en ce que l'assemblage de la bande floquée avec la base est réalisé sous formage tridimensionnel simultané entre les outils supérieur et inférieur en va-et-vient d'une presse, éventuellement avec gaufrage simultané de la couche de mousse floquée.

10. Procédé selon l'une des revendications 1 à 9, caractérisé en ce que l'on utilise comme base une plaque qui a été fabriquée en utilisant une matière synthétique thermoplastique comme liant et un agent de remplissage.

11. Procédé selon la revendication 10, caractérisé en ce qu'on utilise comme liant une polyolefine et comme agent de remplissage une matière cellulosique, en particulier sous forme de polypropylène – farine de bois, avec une teneur d'environ 50% en poids de polypropylène et d'environ 50% en poids de farine de bois.

12. Procédé selon l'une des revendications 10 et 11, caractérisé en ce que'on introduit la plaque de base contenant le liant thermoplastique à l'état chaud, ensemble avec la bande floquée, dans une presse et comprime l'ensemble.

13. Procédé selon la revendcation 1, caractérisé en ce que, pour former la base, on asperge par derrière ou fait mousser par derrière la bande floquée avec de la matière synthétique.

14. Procédé selon l'une des revendications 1 à 11, caractérisé en ce qu'on munit la bande floquée d'une couche d'agnt de pontage stable à la conservation, en particulier sous forme d'une feuille.

15. Procédé selon l'une des revendications 1 à 8, caractérisé en ce que la base est constituée de mousse molle.

## Claims

1. Method for the production of a flocked web, in particular for coating substrates, wherein a thermosetting bonding layer is applied on to a support web, the uncured bonding layer is flocked and the flock layer is subsequently after-treated so as to achieve a texture by means of heated press rollers or press plates, characterised in that as carrier web there is used a porous web, particularly a non-woven fabric web, a knitted web or a woven web, and for the bonding layer there is used a prefoamed, thermosetting foamed composition, in which case the foam rigidity is so adjusted to the porosity of the suport web that, prior to the curing in a heating duct, the foam composition penetrates only superficially into the support web but does not pass completely therethrough, and in that the after-treatment is effected subsequent to the passage through the heating duct.

2. Method according to Claim 1, characterised in that the after-treatment comprises an embossing operation, in particular so as to produce a surface texture in the nature of a woven or knitted textile web or a surface resembling leather.

3. Method according to Claim 1 or 2, characterised in that a spun polyester fabric or polypropylene non-woven fabric is used as support web.

4. Method according to one of Claims 1 to 3, characterised that in a non-woven fabric web is used, in which at least a part of the fibres extend perpendicularly to the web plane, in particular a needle fleece web.

5. Method according to one of Claims 1 to 4, characterised in that a foam based on an aqueous plastics dispersion is used, in particular a foam based on an aqueous dispersion of a thermally cross-linkable polyacrylic acid ester.

6. Method according to one of Claims 1 to 4, characterised in that a foam based on a solvent-containing plastics material is applied.

7. Method according to one of Claims 1 to 4, characterised in that a foam based on a liquid mixture of components reacting with one another is applied.

8. Method according to one of Claims 1 to 7, characterised in that a foam is applied which is foamed by mechanical treatment.

9. Method according to one of Claims 1 to 8, characterised in that the bonding of the flocked web with the substrate is effected with simultaneous three-dimensional deformation between the reciprocating upper and lower tools of a press, optionally with simultaneous embossing of the flocked foam layer.

10. Method according to one of Claims 1 to 9, characterised in that as substrat a board is used which has been produced using a thermoplastic plastics material as binder and a filler.

11. Method according to Claim 10, characterised in that as binder a polyolefin is used and as filler a cellulose material is used, particularly in the form of polypropylene wood flour, with a content of about 50% by weight of polypropylene and about 50% by weight of wood flour.

12 Method according to one of Claims 10 and 11, characterised in that the substrate board containing the thermoplastic binder is placed, in the hot state with the flocked web in a press and pressed together.

13. Method according to Claim 1, characterised in that to form the substrate the flocked web is spray-backed or foam-backed with plastics material.

14. Method according to Claims 1 to 11, characterised in that the flocked web is provided with a storage-stable adhesive coating particularly in the form of a film.

15. Method according to Claims 1 to 8, characterised in that the substrate consists of soft foam material.

# FIG.1

# FIG.2

# FIG.7

0016438

FIG.3

FIG.4

FIG.5

FIG.6